# EUROPEAN PATENT SPECIFICATION

(11) **EP 3 088 254 B1**
(45) Date of publication and mention of the grant of the patent: **14.11.2018**
(21) Application number: 16000967.6
(22) Date of filing: 29.04.2016
(51) Int. Cl.: B60R 9/10

(54) **DEVICE FOR ATTACHMENT OF AN ACCESSORY ONTO A TOWBAR**
VORRICHTUNG ZUM BEFESTIGEN EINES ZUBEHÖRS AN EINER ABSCHLEPPSTANGE
DISPOSITIF POUR LA FIXATION D'UN ACCESSOIRE SUR UN TIMON

(30) Priority: 01.05.2015 NL 1041286
(43) Date of publication of application: 02.11.2016
(73) Proprietor: Haarhuis, Willibrordus Franciscus Maria, 7678 AE Geesteren (NL)
(72) Inventor: Haarhuis, Willibrordus Franciscus Maria, 7678 AE Geesteren (NL)
(74) Representative: Ferguson, Alexander

(56) References cited:
- EP-A1- 0 943 495
- WO-A2-02/062601

## Description

### BACKGROUND OF THE INVENTION

The invention relates to a device for mounting an accessory to a tow hitch of a vehicle, which tow hitch has been provided with a tow ball. The invention furthermore relates to an assembly of such a device and an accessory, such as a bike carrier, a luggage carrier or a blocking device for a rear door or tailgate of a vehicle.

It is known to attach an accessory or added auxiliary device to a tow hitch of a vehicle, such as a bike carrier, a luggage carrier or a door blocking device extending in the swing path of a rear door or tailgate of a vehicle. Particular attention is given to the manner in which the accessory is coupled to the tow hitch ball. There are many embodiments, such as one having a vertical clamping action on the tow ball, between the ball's upper side and the ball's lower edge. See for instance NL 93.01797, FR 2.750.376, NL 87.02736 and NO 174.246, in which use is made of a tensioning bolt to be biased against the tow ball's upper side. NL 1026760 shows a variant thereof, having a lever which has a pin at the end, which pin can be urged into a recess in the top surface of the tow ball. In EP 0.710.588 the ball is engaged at the upper side along the edge and leverage causes a bracket to be pulled against the ball's lower edge.

In other embodiments the ball is clamped horizontally, see for instance EP 1.095.820, NL 1024559, NL 1027082, NL 1038326 and NL 2009574. An auxiliary member to be fastened to the ball by means of two half-shells, one of which is movable, is known from WO 2007/036921.

NL 2004134 shows a device having a vertical tube that is lowered from the top down over the ball until the tube's lower edge comes to rest on a bracket attached to the tow hitch neck. An auxiliary member is then arranged on the tube using transverse pins, wherein the pins extend underneath the ball. The auxiliary member is then secured using a lock.

EP-A-0.943.495 discloses a device as described in the preamble of claim 1.

### SUMMARY OF THE INVENTION

It is an object of the invention to provide a device of the type mentioned in the preamble, that is easy to mount.

It is an object of the invention to provide a device of the type mentioned in the preamble, that is user-friendly.

It is an object of the invention to provide a device of the type mentioned in the preamble, that is easy to assemble.

It is an object of the invention to provide a device of the type mentioned in the preamble, that can be secured against unauthorised removal.

It is an object of the invention to provide a device of the type mentioned in the preamble, that can easily be removed by authorised persons.

It is an object of the invention to provide an assembly of a device of the type mentioned in the preamble including an accessory, with which assembly unauthorised opening of rear doors of vehicles can be obstructed.

For achieving at least one of these objects the invention provides a device for mounting an accessory to a tow hitch of a vehicle, which tow hitch has been provided with a tow ball, the device comprising
- a holder for the accessory,
- a housing
- a sliding member
- wherein the housing defines a first accommodation space for the sliding member
- wherein the sliding member forms a second accommodation space for accommodation of the tow ball,
- wherein when in use the sliding member can be slid relatively up and down in the first accommodation space in mutually opposing first and second directions, between an access position in which the second accommodation space is accessible to the tow ball and a coupling position which, when in use is situated higher relative to the access position, in which coupling position the tow ball is coupled to the device,
- wherein the device furthermore comprises one or more coupling elements that can be moved relative to the sliding member and relative to the housing between an inactive position in said access position and an active position in the said coupling position, imposed by the relative movement of the sliding member relative to the housing. In that way the coupling can easily be effected.

In a further development thereof the sliding member, in particular in the second accommodation space defined by the sliding member, has been provided with a first stop facing in the second direction for abutting against a second stop provided on the tow hitch, in particular on the tow ball, which second stop has one or more surfaces having a normal with a directional component in the first direction, for, after the first and second stop abutting one another, relatively moving the sliding member in the first accommodation space in the first direction from the access position to the coupling position when the housing is moved relative to the tow hitch in the second direction. In that way, in an almost continuous downward motion of placing the device onto the tow ball and then after the first and second stops have abutted each other, the relative movement of the sliding member and housing for effecting the coupling can be realised.

In one embodiment the one or more coupling elements are movable relative to the sliding member, preferably in directions transverse to the first direction, between the inactive position outside the path profile of the tow ball when introducing the tow ball into the second accommodation space and the active position in which they extend within said path profile.

In one embodiment, in the relative shifting of the sliding member in the first direction, the housing forms a first operating element for imposing the movement of the one or more coupling elements from the inactive position into the active position, wherein the one or more coupling elements have been arranged for in the active position pressing against surfaces of the tow ball that have a normal with a directional component in the second direction, in the coupling position of the sliding member.

When placing the device downwards over and on the tow ball, the largest diameter of the tow ball - considered relatively, the tow ball is in fact stationary - will in the second accommodation space be brought past the one or more (then still inactive) coupling elements and the tow hitch, in particular the tow ball, will with the first stop contact the second stop of the sliding member, after which upon pressing the housing further downward, the sliding member in the first accommodation space, will be urged relatively in the first direction within the housing and in said relative movement of the sliding member (relative to the housing) an activation of the one or more coupling elements can then take place which can then be active under the tow ball for coupling the device to the tow ball. As a result, placing the device according to the invention is a simple procedure.

In one embodiment the sliding member forms a second operating element, preferably having a guide that preferably is transverse to the first direction, for guiding the one or more coupling elements in their movement between their inactive and their active position. The guide may be part of a third accommodation space for each coupling element, which accommodation space is formed by the sliding member. The third accommodation space can be provided with a threshold for in a direction towards the second accommodation space keeping the coupling element in question from dropping out.

In one embodiment the housing forms a fourth accommodation space for each coupling element in its inactive position. At the side of the sliding member the fourth accommodation space may be bounded by run-on surfaces having a normal with a directional component in the second direction and a directional component towards the second accommodation space. In that way room is easily provided to the coupling element in its inactive position. Due to the run-on surfaces, the coupling element in question, when imposing a force thereon in the first direction, can be urged inside relative to the housing. The coupling element can be movable transverse to the first direction relative to the housing and, after exiting the fourth accommodation space, also in the first and second directions relative to the housing.

The housing can bound the fourth accommodation spaces in a direction facing away from the second accommodation space.

In a simple embodiment the housing forms a third stop for keeping the coupling elements in the active position and the housing thus cooperates in keeping the one or more coupling elements in said position, which third stop preferably has a normal that is transverse to the first direction. The third stop may for instance have been formed by an inner surface of the housing. In the active position of the one or more coupling elements the third stop can bound the third accommodation space at its side facing away from the second accommodation space.

In one embodiment the third and fourth accommodation spaces are in line with each other in the access position of the sliding member and are not in line with each other in its coupling position.

The coupling elements preferably are separate elements such as rolls or balls, which in particular are rotatable about a centre line parallel to the tangent line to the tow ball at the location of the contact between the coupling element in question and the tow ball. This is conducive to the movement of the coupling elements.

In a simple embodiment the sliding member forms a chamber having an upper wall, a bottom defining an access opening for the tow ball, and one or more sidewalls. The sidewall may form a circularly running circumferential wall of the second accommodation space. The sliding member may have an inner diameter or inner width of approximately 5 cm. The upper wall can form the first stop.

The distance between the lower side of the upper wall and the edge of the third accommodation spaces situated closest to the upper wall, can be larger than approximately 2.4 cm.

The distance between the lower side of the upper wall and the edge of the third accommodation spaces situated farthest from the upper wall, can be smaller than approximately 4 cm.

In one embodiment that is favourable in terms of stability, the coupling elements, when considered in horizontal circumferential direction of the tow ball, are operative on a number of locations that are regularly spaced apart.

For maintaining the coupling position, the device according to the invention can be provided with a locking device for locking the sliding member against movement of the sliding member in the second direction. In a compact embodiment the locking device may comprise a fourth stop forming a slideable unity with the sliding member as well as a movable locking element, such as a pawl, which is movable between a locking position in operative connection with the fourth stop and a release position, free therefrom. For counteracting unauthorised unlocking of the device, it comprises a lock for securing the locking element, in particular pawl, in the locking position, wherein the lock preferably comprises a spring bolt. The pawl can be arranged with a bias towards the release position. For that purpose, the pawl may for instance have been provided with a weight having the pawl tilt towards the release position or for instance be biased towards the release position by means of a spring.

Said fourth stop may have been arranged on a rod, to the end of which the sliding member has been attached, which rod extends in the first direction.

In one embodiment the sliding member has been pre-biased towards the access position. For that purpose, the device may comprise a spring for said pre-bias, operative between a fifth stop fixed to the housing and a sixth stop fixed to the rod. The fifth and sixth stop may be situated at the side of the fourth stop facing away from the sliding member in the first direction.

In one embodiment the housing shields the first accommodation space in all horizontal directions.

In a simple and compact embodiment, the housing is straight-cylindrical. Its cross-section may for instance be rectangular or circular.

In a convenient embodiment the housing is tubular and when used the first direction is vertically upwards.

In a simple embodiment the sliding member can only be moved in the first accommodation space according to a linear path.

According to a further aspect, the invention provides a device according to the preamble of claim 1, wherein the sliding member, in particular in the second accommodation space defined by the sliding member, has been provided with a first stop facing in the second direction, and the tow hook, in particular the tow ball, has been provided with a second stop having one or more surfaces having a normal with a directional component in the first direction, for, at the first and second stops abutting one another, moving the sliding member in the first accommodation space in the first direction from the access position to the coupling position,
-- wherein the device further comprises one or more coupling elements that are movable relative to the sliding member and preferably to the housing as well, preferably in directions transverse to the first direction, between an inactive position outside the path profile of the tow ball when introducing the tow ball into the second accommodation space and an active position in which they extend within said path profile,
-- wherein the housing in the relative shifting of the sliding member in the first direction forms a first operating element for imposing the movement of the one or more coupling elements from the inactive position to the active position
-- wherein the one or more coupling elements have been arranged for in the active position pressing against surfaces of the tow ball, which surfaces have a normal with a directional component in the second direction, in the coupling position of the sliding member. This device can be provided with one or more of the characterising parts described above and/or described in the attached claims.

According to a further aspect the invention provides an assembly of a device according to the invention and an accessory to be mounted on a tow hitch using such a device, wherein the holder and the accessory are fixed to each other.

According to a further aspect the invention provides an assembly of a device according to the invention and an accessory to be mounted on a tow hitch using such a device, wherein the holder and the accessory are detachably fastened to each other. The housing may be configured like a holder, in particular having the shape of a tube, wherein the accessory has then been provided with a pin fitting in the tube.

The accessory may for instance be a bike carrier or a luggage carrier.

The accessory may be a blocking device for a rear door or tailgate of a vehicle.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### BRIEF DESCRIPTION OF THE DRAWINGS

The invention will be elucidated on the basis of an exemplary embodiment shown in the attached drawings, in which:
Figures 1A-C show a schematic vertical cross-section of an exemplary embodiment of a device according to the invention, in a condition prior to being placed on a tow hitch ball, a detail of figure 1A and a horizontal cross-section of the device according to figure 1A, respectively;
Figures 2A and 2B show schematic depictions of the device of figures 1A-C in consecutive stages of being placed on the tow ball of a tow hitch; and
Figures 3A-C show a schematic cross-section of the device of figure 1A, in a condition in which it has been placed on a tow hitch, a detail of figure 3A and a horizontal cross-section of the device of figure 3A, respectively.

### DETAILED DESCRIPTION OF THE DRAWINGS

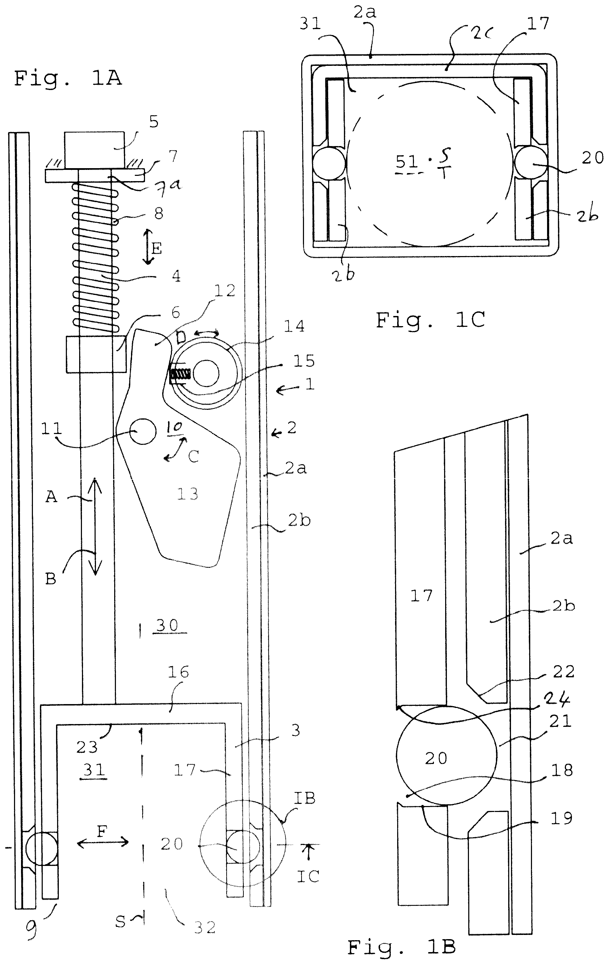

The device 1 of figure 1A comprises a hardened steel housing or tube 2 having an outer wall 2a that is rectangular in cross-section and a U-profile attached therein by means of bolts, the U-profile having inner walls 2b that are situated opposite each other and a wall 2c connecting them. The tube has a centre line S, in this case vertical, and a bottom opening 9. The tube 2 defines a first accommodation space 30, in which are housed a sliding member 3, a support plate 7 that is fixed to the housing 2, a lock 14 and a locking pawl 10. Alternatively, the tube 2 may have a straight circle-cylindrical outer wall.

The sliding member 3 is made of hardened steel and has an inverted U-shape, with an upper wall 16 and two pending sidewalls 17, with which a second accommodation space 31 having access opening 32 is defined. Each sidewall 17 has a (third) accommodation space 18 forming a radially continuous hole and being defined by edge 19 and in the inward direction towards centre line S being provided with a circumferential confining edge 24.

Near the lower end the inner walls 2b of the housing 2 have been provided with a number of (fourth) accommodation spaces 21, which are radially oriented, diametrical with respect to each other relative to the centre line S and at the inside are bounded by bevelled edges 22.

The accommodation spaces 21 and 18, also see figures 1B and 1C, provide room to separate ball-shaped coupling elements 20 that are capable of moving in directions F. They can be arranged so as to be regularly distributed in horizontal circumferential direction (relative to the tow ball to be accommodated), in numbers of two or more, in particular more than two if the second accommodation space has a circular cross-section. The accommodations spaces 18 have a diameter that is slightly larger than the diameter of the balls 20, the confining edges 24 have a smaller diameter, see figure 1B. At the lower side thereof, the upper wall 16 defines a (first) stop surface 23. The sliding member 3 snugly fits within the inner walls 2b and is able to slide up (first direction A) and down (second direction B) in between them, relatively speaking.

A steel rod 4 has been attached at the upper wall 16 of the sliding member 3, which rod can be slid up and down with sliding member 3 in the first direction A and the second direction B. The rod 4 is then guided by the guide of the sliding member 3 within the inner walls 2b and in a guiding hole 7a in the plate 7. A ring 6 has been attached to the rod, against which ring (sixth stop) the lower end of a compression spring 8 supports, which compression spring 8 with its other end supports against support plate 7 (fifth stop) and can be pressed in/extended in the directions E. A ring 5 attached to the upper end of the rod 4 ensures that the rod 4 cannot exit downward from the guide hole 7a and thus that the sliding member 3 always remains inside the tube 2. Further functions of the spring will be discussed below.

The ring 6 also serves as locking stop for the locking pawl 10. The locking pawl 10 is rotatable (directions C) about a pin 11 that is fixed to the tube 2 and has a pawl member 12 and a mass member 13 that is situated at the other side of the pin 11, as a result of which the locking pawl 10 has a bias towards a free position. This can also be achieved using a spring extending between a fixed plate on the housing (top right to the shaft 11 in the drawing) and the pawl member 12. Next to the pawl member 12 a lock 14 has been arranged, provided with a tongue 15 that is spring-biased to the outside and that can be retracted by rotating a key in direction D.

For illustration purposes a tow ball 51 of a tow hitch has been sketched in figure 1C.

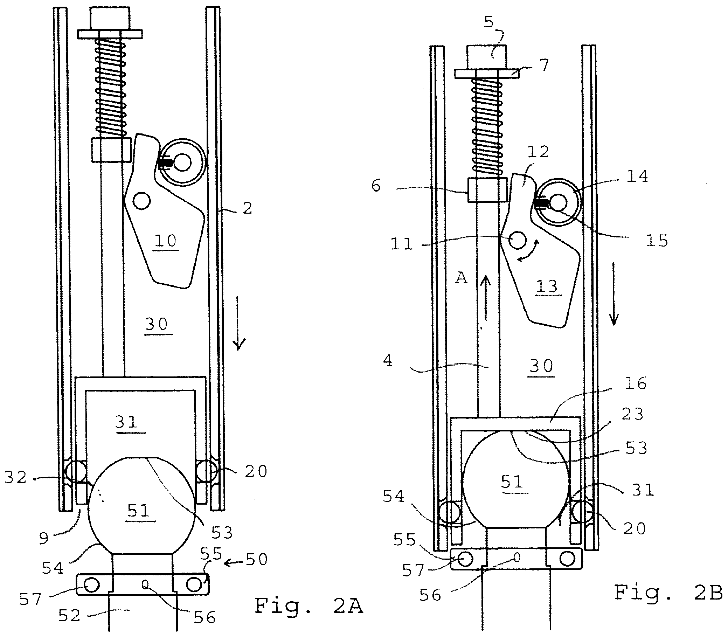

Figure 2A shows a part of a tow hitch 50 attached to the tail of a motor vehicle. The tow hitch 50 has a neck 52 and said tow ball 51. The tow ball 51 has a centre line T and a flattened top 53 forming a second stop. Alternatively, the ball 51 can be formed with a convex upper surface, that may form the second stop. The ball 51 has a diameter of approximately 50 mm. The accommodation space 31 has a width that almost equals it, so that the ball can fittingly yet slidably be accommodated in the accommodation space 31. The ball 51 has a convex lower surface 54. A clamping piece 55 has been attached to the neck 52 by means of two bolts 57, wherein rotation about centre line T is prevented using an adjusting screw 56 having a cup point that engages into the surface of the tow hitch neck.

When placing the device 1, the tube 2 with its lower end and opening 9 and access opening 32 is brought straight above the stationary ball 51 and the tube is lowered onto/over the ball 51. By operating (direction D) the locking key, the user has retracted the spring tongue 15 beforehand. Figure 2A shows the moment in which the ball 51 has entered the accommodation space 31 through the access opening 32 and the largest cross-section of the tow ball 51, considered in transverse plane, is situated only just below the balls 20. The centre lines S and T can coincide (figure 1C).

In figure 2B the ball 51 has entered the accommodation space 31, with the ball's 51 largest cross-section passed beyond, to above, the balls 20. The top 53 has abutted against the stop surface 23 of the sliding member 3. The balls 20 are still situated in their accommodation spaces 18 and 21, in the inactive position. The pawl 12 is situated adjacent to the ring 6 under the influence of the mass member 13. It can furthermore be seen that the clamping piece 55 also fits in the opening 9 and is able to enter the accommodation space 30. The clamping piece 55 in the opening 9 prevents rotation of the tube 2 about centre line T relative to the tow ball.

The tube 2 is then pressed further downward by the user, the sliding member 3 being shifted relatively in the first direction A within the tube 2, guided by rod 4 and by inner wall 2b,2c. The spring 8 is then pressed in. In the relative shifting of sliding member 3 relative to the inner walls 2b, the (lower) edges 19 exert an upward force onto the balls 20, which as a result run upwards along the bevelled edges 22 of the accommodation spaces 21 and as a result are urged radially inwards until the balls 20 have fully emerged from the accommodation spaces 21. As the inner walls 2b move downwards relative to the sliding member 3 the balls 20 end up above the accommodation spaces 21.

The pawl member 12 will end up below the ring 6, wherein the lock spring pressure is able to extend the tongue 15. The lock spring pressure overcomes the force of the mass member 13, as a result of which the pawl member 12 is urged below the ring 6.

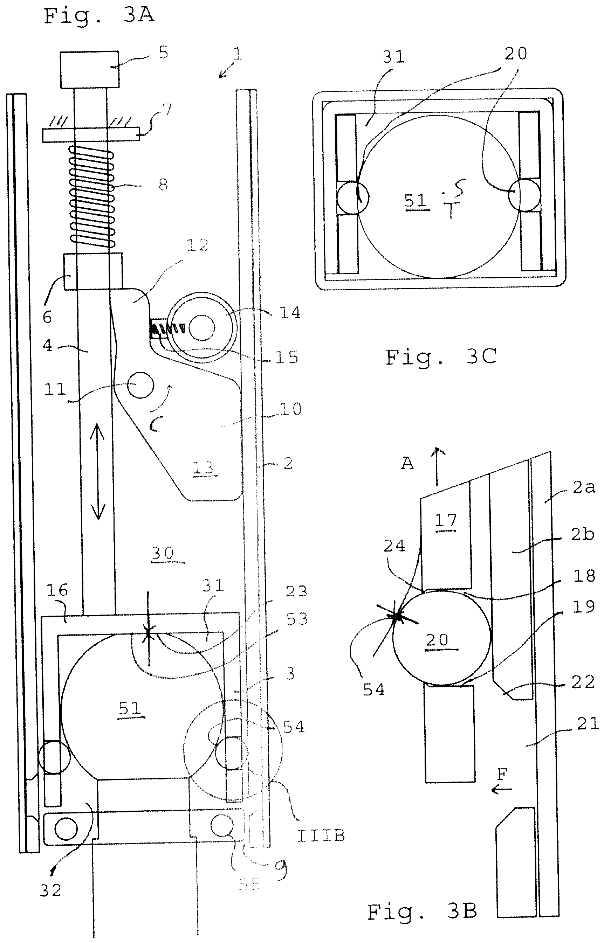

Subsequently the user is able to let go of the tube 2, resulting in the spring 8 being able to expand slightly and enabling the ring 6 to forcefully push against the pawl member 12 with the lower side, which forms a fourth stop. The situation of figure 3A, the coupling position, has been reached. The locking pawl 10 locks said coupling position. With convex surfaces 54, the ball 51 rests against the balls 20, that support against the edges 19 and the inner surface of inner walls 2b, which inner surface forms a third stop for the balls. Lifting the device 1 away from the tow ball is thus prevented. The clamping piece 55 has ended up in the opening 9, a short distance away from the lower edge of the sliding member 3, in order to prevent an unwanted tilting motion of the device 1 relative to the ball 51 and/or to prevent access of a breaking tool.

When detaching the device 1, the user uses the lock 14 again in order to retract the tongue 15. As the sliding member 3 and therefore the rod 4 are stationary in vertical direction, pressing on the tube 2 from above, will enable moving the shaft 11 and thus the locking pawl 10 slightly downwards relative to the ring 6, so that the pawl member 12 is given room to rotate away clockwise, free from ring 6, under the influence of the mass member 13 of the locking pawl 10. The spring 8 is then able to relax and urge the sliding member in the second direction B. The balls 20 then slide over the inner surface of the inner wall 2b until the situation of figure 2B has been reached again. In that case both balls 20 are in the accommodation spaces 21 and 18 again, in the inactive position, and the tube 2 can be lifted wherein the tow ball 51 moves out of the sliding member 3, towards a situation like the one of figure 2A.

The device 1 can be slim and compact. There are only a few rotating parts, as a result of which long-term failure-free use is possible. The housing, such as tube 2, shields the coupling elements, such the balls 20, the sliding member and the locking members from the surrounding area, so that unauthorised persons cannot reach it in order to manipulate it or detach it.

The device according to the invention can be easy to manage and operate and easily be placed on a tow hitch ball by pushing it down and easily be detached from it if authorised.

The tube 2 as a holder can form one unity with an accessory, such as a bike carrier or door blocking device extending in the swing path of a rear door or tailgate of a car.

Alternatively, the tube 2 may serve to fasten an accessory thereon, for instance with a coupling pin extending in the tube, so that the accessory can be detachably fastened to the device 1.

## Claims

1. Device (1) for mounting an accessory to a tow hitch of a vehicle, which tow hitch has been provided with a tow ball, the device comprising a holder for the accessory, a housing (2) and a sliding member (3), wherein the housing defines a first accommodation space (30) for the sliding member, which housing preferably shields the first accommodation space in all horizontal directions and/or preferably has a straight-cylindrical cross-section, wherein the sliding member forms a second accommodation space (31) for accommodating the tow ball, wherein when in use the sliding member (3) can be slid up and down in the first accommodation space (30) in mutually opposing first (A) and second (B) directions, between an access position in which the second accommodation space is accessible to the tow ball and a coupling position situated higher when in use, in which coupling position the tow ball is coupled to the device, wherein, preferably, the first direction (A) is vertically upward, **characterised in that** the device furthermore comprises one or more coupling elements (2) that can be moved relative to the sliding member (3) and relative to the housing (2) between an inactive position in said access position and an active position in the said coupling position, imposed by the relative movement of the sliding member relative to the housing.

2. Device according to claim 1, wherein the sliding member (3), in particular in the second accommodation space (31) defined by the sliding member, has been provided with a first stop (23) facing in the second direction (B) for abutting against a second stop provided on the tow hitch, in particular the tow ball, which second stop has one or more surfaces having a normal with a directional component in the first direction, for, after the first and second stop abutting one another, moving the sliding member (3) in the first accommodation space (30) in the first direction (A) from the access position to the coupling position when the housing (2) is moved relative to the tow hitch in the second direction.

3. Device according to claim 1 or 2, wherein the one or more coupling elements (20) are movable relative to the sliding member (3), preferably in directions transverse to the first direction (A), between the inactive position outside the path profile of the tow ball when introducing the tow ball into the second accommodation space and the active position in which they extend within said path profile.

4. Device according to claim 1, 2 or 3, wherein in the relative shifting of the sliding member (3) in the first direction (A), the housing (2) forms a first operating element for imposing the movement of the one or more coupling elements (20) from the inactive position into the active position, wherein the one or more coupling elements have been arranged for in the active position pressing against surfaces of the tow ball that have a normal with a directional component in the second direction (B), in the coupling position of the sliding member, wherein, preferably, the sliding member (3) forms a second operating element, preferably having a guide (19) that preferably is transverse to the first direction, for guiding the one or more coupling elements (20) in the movement between the inactive and the active position thereof, wherein, preferably, the guide (19) is part of a third accommodation space (18) for each coupling element, which accommodation space is formed by the sliding member and wherein, preferably, the third accommodation space (18) has been provided with a threshold (24) for in a direction towards the second accommodation space keeping the coupling element in question from dropping out.

5. Device according to any one of the preceding claims, wherein the housing forms a (fourth) accommodation space (21) for each coupling element (20) in its inactive position, wherein, preferably, the fourth accommodation space at the side of the sliding member (3) is bounded by run-on surfaces (22) having a normal with a directional component in the second direction (B) and a directional component towards the second accommodation space (31).

6. Device according to any one of the preceding claims, wherein the housing (2) forms a (third) stop for keeping the coupling elements (20) in the active position, which third stop preferably has a normal that is transverse to the first direction, wherein, preferably, in the active position of the one or more coupling elements the third stop bounds said third accommodation space (18) at its side facing away from the second accommodation space.

7. Device according to claim 5 or 6, when dependent on claim 4 and provided with said third accommodation spaces (18), wherein said third (18) and fourth (21) accommodation spaces are in line with each other in the access position of the sliding member (3) and are not in line with each other in its coupling position.

8. Device according to any one of the preceding claims, wherein the one or more coupling elements (20) are separate elements, such as rolls or balls, in particular are rotatable about a centre line parallel to the tangent line to the tow ball at the location of the contact between the coupling element in question and the tow ball.

9. Device according to any one of the preceding claims, wherein the sliding member (3) forms a chamber (31) having an upper wall (16), a bottom defining an access opening (32) for the tow ball and one or more sidewalls (17), wherein, preferably, the sliding member has an inner diameter or width of approximately 5 cm, wherein, in case of dependency on claim 2, the upper wall (16) preferably forms the first stop (23).

10. Device according to claim 9, when dependent on claim 4 and provided with said third accommodation spaces (18), wherein the distance between the lower side of the upper wall and the edge of the said (third) accommodation spaces (18) situated closest to the upper wall (16) is larger than approximately 2.4 cm, wherein, preferably, the distance between the lower side (23) of the upper wall (16) and the edge of the said (third) accommodation spaces situated farthest from the upper wall is smaller than approximately 4 cm.

11. Device according to any one of the preceding claims, wherein the movable coupling elements (20), when considered in horizontal circumferential direction of the tow ball, are operative on a number of locations that are regularly spaced apart.

12. Device according to any one of the preceding claims, provided with a locking device (10) for locking the sliding member (3) against movement of the sliding member in the second direction (B), wherein, preferably, the locking device comprises a (fourth) stop (6) forming a slideable unity with the sliding member and a movable locking element (12), which is movable between a locking position in operative connection with the fourth stop and a release position free therefrom, preferably furthermore comprising a lock (14) for securing the locking element (12) in the locking position, wherein the lock preferably comprises a spring bolt (15), wherein, preferably, the locking element is a pawl (12), which preferably is arranged with a bias towards the release position.

13. Device according to claim 12, wherein said (fourth) stop (6) has been arranged on a rod (4), to the end of which the sliding member (3) has been attached, which rod extends in the first direction (A).

14. Device according to any one of the preceding claims, wherein the sliding member (3) has been pre-biased towards the access position, preferably furthermore comprising a spring (8) for said pre-bias, operative between a (fifth) stop (7) fixed to the housing and a (sixth) stop (6) fixed to the rod, wherein, preferably, the said fifth and sixth stop are situated at the side of said fourth stop facing away from the sliding member in the first direction.

15. Assembly of a device (1) according to any one of the claims 1-14 and an accessory to be mounted on a tow hitch using such a device, wherein the holder and the accessory are fixed to each other.

## Patentansprüche

1. Vorrichtung (1) zum Anbringen eines Zubehörteils an einer Anhängerkupplung eines Fahrzeugs, wobei diese Anhängerkupplung mit einer Kupplungskugel versehen ist, wobei die Vorrichtung einen Halter für das Zubehörteil, ein Gehäuse (2) und ein Gleitelement (3) umfasst, wobei das Gehäuse einen ersten Aufnahmeraum (30) für das Gleitelement definiert, wobei dieses Gehäuse vorzugsweise den ersten Aufnahmeraum in allen horizontalen Richtungen abschirmt und/oder vorzugsweise einen einem geraden Zylinder entsprechenden Querschnitt aufweist, wobei das Gleitelement einen zweiten Aufnahmeraum (31) zum Aufnehmen der Kupplungskugel bildet, wobei im Gebrauch das Gleitelement (3) in dem ersten Aufnahmeraum (30) in einer ersten (A) und einer zweiten (B) Richtung, die zueinander entgegengesetzt sind, nach oben und unten verschoben werden kann, zwischen einer Zugangsposition, in welcher der zweite Aufnahmeraum für die Kupplungskugel zugänglich ist, und einer Kupplungsposition, die sich im Gebrauch höher befindet, wobei in dieser Kupplungsposition die Kupplungskugel mit der Vorrichtung gekoppelt ist, wobei vorzugsweise die erste Richtung (A) vertikal nach oben ist, **dadurch gekennzeichnet, dass** die Vorrichtung ferner ein oder mehrere Kupplungselemente (2) umfasst, welche, unter der Wirkung der relativen Bewegung des Gleitelements zum Gehäuse, relativ zu dem Gleitelement (3) und relativ zu dem Gehäuse (2) zwischen einer inaktiven Position in der Zugriffsposition und einer aktiven Position in der Kupplungsposition bewegt werden können.

2. Vorrichtung nach Anspruch 1, wobei das Gleitelement (3), insbesondere der durch das Gleitelement definierte zweite Aufnahmeraum (31), mit einem ersten Anschlag (23) versehen ist, welcher der zweiten Richtung zugewandt (B) ist, um an einem zweiten Anschlag zur Anlage zu kommen, der an der Anhängerkupplung, insbesondere der Kupplungskugel, vorgesehen ist, wobei dieser zweite Anschlag eine oder mehrere Flächen mit einer Normalen mit einer Richtungskomponente in der ersten Richtung aufweist, um, nachdem der erste und der zweite Anschlag aneinander zur Anlage gekommen sind, das Gleitelement (3) im ersten Aufnahmeraum (30) in der ersten Richtung (A) aus der Zugangsposition in die Kupplungsposition zu bewegen, wenn das Gehäuse (2) relativ zu der Anhängerkupplung in die zweite Richtung bewegt wird.

3. Vorrichtung nach Anspruch 1 oder 2, wobei das eine oder die mehreren Kupplungselemente (20) relativ zu dem Gleitelement (3) vorzugsweise in Richtungen quer zur ersten Richtung (A) zwischen der inaktiven Position außerhalb des Wegprofils der Kupplungskugel, wenn die Kupplungskugel in den zweiten Aufnahmeraum eingeführt wird, und der aktiven Position, in welcher sie sich innerhalb dieses Wegprofils erstrecken, beweglich sind.

4. Vorrichtung nach Anspruch 1, 2 oder 3, wobei bei der relativen Verschiebung des Gleitelements (3) in der ersten Richtung (A) das Gehäuse (2) ein erstes Betätigungselement zum Bewirken der Bewegung des einen oder der mehreren Kupplungselemente (20) aus der inaktiven Position in die aktive Position bildet, wobei das eine oder die mehreren Kupplungselemente so angeordnet sind, dass sie in der aktiven Position gegen Flächen der Kupplungskugel drücken, welche in der Kupplungsposition des Gleitelements eine Normale mit einer Richtungskomponente in der zweiten Richtung (B) aufweisen, wobei vorzugsweise das Gleitelement (3) ein zweites Betätigungselement bildet, das vorzugsweise eine Führung (19) aufweist, welche vorzugsweise quer zur ersten Richtung angeordnet ist, um das eine oder die mehreren Kupplungselemente (20) in der Bewegung zwischen der inaktiven und der aktiven Position derselben zu führen, wobei vorzugsweise die Führung (19) Teil eines dritten Aufnahmeraums (18) für jedes Kupplungselement ist, wobei dieser Aufnahmeraum von dem Gleitelement gebildet wird und wobei vorzugsweise der dritte Aufnahmeraum (18) mit einer Schwelle (24) versehen ist, um ein Herausfallen des betreffenden Kupplungselements in einer Richtung zum zweiten Aufnahmeraum hin zu verhindern.

5. Vorrichtung nach einem der vorhergehenden Ansprüche, wobei das Gehäuse einen (vierten) Aufnahmeraum (21) für jedes Kupplungselement (20) in seiner inaktiven Position bildet, wobei vorzugsweise der vierte Aufnahmeraum auf der Seite des Gleitelements (3) durch Auflaufflächen (22) begrenzt ist, die eine Normale mit einer Richtungskomponente in der zweiten Richtung (B) und einer Richtungskomponente zum zweiten Aufnahmeraum (31) hin aufweisen.

6. Vorrichtung nach einem der vorhergehenden Ansprüche, wobei das Gehäuse (2) einen (dritten) Anschlag zum Halten der Kupplungselemente (20) in der aktiven Position bildet, wobei dieser dritte Anschlag vorzugsweise eine Normale aufweist, welche quer zur ersten Richtung verläuft, wobei vorzugsweise in der aktiven Position des einen oder der mehreren Kupplungselemente der dritte Anschlag den dritten Aufnahmeraum (18) auf seiner von dem zweiten Aufnahmeraum abgewandten Seite begrenzt.

7. Vorrichtung nach Anspruch 5 oder 6, wenn abhängig von Anspruch 4 und mit dem dritten Aufnahmeraum (18) versehen, wobei der dritte (18) und der vierte (21) Aufnahmeraum in der Zugangsposition des Gleitelements (3) in Reihe zueinander angeordnet sind und in seiner Kupplungsposition nicht in Reihe zueinander angeordnet sind.

8. Vorrichtung nach einem der vorhergehenden Ansprüche, wobei das eine oder die mehreren Kupplungselemente (20) separate Elemente sind, wie etwa Rollen oder Kugeln, die insbesondere um eine Mittellinie drehbar sind, die parallel zu der Tangente an die Kupplungskugel am Ort des Kontakts zwischen dem betreffenden Kupplungselement und der Kupplungskugel ist.

9. Vorrichtung nach einem der vorhergehenden Ansprüche, wobei das Gleitelement (3) eine Kammer (31) bildet, die eine obere Wand (16), einen Boden, der eine Zugangsöffnung (32) für die Kupplungskugel definiert, und eine oder mehrere Seitenwände (17) aufweist, wobei vorzugsweise das Gleitelement einen Innendurchmesser oder eine Breite von ungefähr 5 cm aufweist, wobei im Falle einer Abhängigkeit von Anspruch 2 die obere Wand (16) vorzugsweise den ersten Anschlag (23) bildet.

10. Vorrichtung nach Anspruch 9, wenn abhängig von Anspruch 4 und mit dem dritten Aufnahmeraum (18) versehen, wobei der Abstand zwischen der Unterseite der oberen Wand und dem Rand des (dritten) Aufnahmeraums (18), der sich zur oberen Wand (16) am nächsten befindet, größer als ungefähr 2,4 cm ist, wobei vorzugsweise der Abstand zwischen der Unterseite (23) der oberen Wand (16) und dem Rand des (dritten) Aufnahmeraums, der von der oberen Wand am weitesten entfernt ist, kleiner als ungefähr 4 cm ist.

11. Vorrichtung nach einem der vorhergehenden Ansprüche, wobei die beweglichen Kupplungselemente (20), in horizontaler Umfangsrichtung der Kupplungskugel gesehen, an einer Anzahl von Orten wirksam sind, welche gleichmäßig voneinander beabstandet sind.

12. Vorrichtung nach einem der vorhergehenden Ansprüche, welche mit einer Verriegelungsvorrichtung (10) zum Verriegeln des Gleitelements (3) gegen Bewegung des Gleitelements in der zweiten Richtung (B) versehen ist, wobei die Verriegelungsvorrichtung vorzugsweise einen (vierten) Anschlag (6), der mit dem Gleitelement eine gleitfähige Einheit bildet, und eine bewegliches Verriegelungselement (12), welches zwischen einer mit dem vierten Anschlag in Wirkverbindung stehenden Verriegelungsposition und einer von diesem freien Freigabeposition beweglich ist, umfasst, und vorzugsweise ferner eine Arretiervorrichtung (14) zum Sichern des Verriegelungselements (12) in der Verriegelungsposition umfasst, wobei die Arretiervorrichtung vorzugsweise einen Federbolzen (15) umfasst, wobei das Verriegelungselement vorzugsweise eine Sperrklinke (12) ist, welche vorzugsweise mit einer Vorspannung in Richtung der Freigabeposition angeordnet ist.

13. Vorrichtung nach Anspruch 12, wobei der (vierte) Anschlag (6) auf einer Stange (4) angeordnet ist, an deren Ende das Gleitelement (3) befestigt ist, wobei sich diese Stange in der ersten Richtung (A) erstreckt.

14. Vorrichtung nach einem der vorhergehenden Ansprüche, wobei das Gleitelement (3) in Richtung der Zugangsposition vorgespannt ist, vorzugsweise ferner eine Feder (8) für diese Vorspannung umfassend, die zwischen einem an dem Gehäuse befestigten (fünften) Anschlag (7) und einem an der Stange befestigten (sechsten) Anschlag (6) wirkt, wobei sich vorzugsweise der fünfte und der sechste Anschlag auf der Seite des vierten Anschlags befinden, die von dem Gleitelement in der ersten Richtung abgewandt ist.

15. Anordnung einer Vorrichtung (1) nach einem der Ansprüche 1-14 und eines Zubehörteils, das an einer Anhängerkupplung unter Verwendung einer solchen Vorrichtung anzubringen ist, wobei der Halter und das Zubehörteil aneinander befestigt sind.

## Revendications

1. Dispositif (1) pour monter un accessoire sur un crochet d'attelage d'un véhicule, ledit crochet d'attelage ayant été pourvu d'une boule d'attelage, le dispositif comprenant un support pour l'accessoire, un boîtier (2) et un élément coulissant (3), dans lequel le boîtier définit un premier espace de réception (30) pour l'élément coulissant, ledit boîtier protégeant de préférence le premier espace de réception dans toutes les directions horizontales et/ou présentant de préférence une section transversale cylindrique droite, dans lequel l'élément coulissant forme un deuxième espace de réception (31) pour recevoir la boule d'attelage, dans lequel lorsque lors de l'utilisation l'élément coulissant (3) peut être glissé vers le haut et vers le bas dans le premier espace de réception (30) dans des première (A) et seconde (B) directions mutuellement opposées, entre une position d'accès dans laquelle le deuxième espace de réception est accessible à la boule d'attelage et une position de couplage située plus haut pendant l'utilisation, position de couplage dans laquelle la boule d'attelage est couplée au dispositif, dans lequel, de préférence, la première direction (A) est verticalement montante, **caractérisé en ce que** le dispositif comprend en outre un ou plusieurs élément(s) de couplage (2) qui peu(ven)t être déplacé(s) par rapport à l'élément coulissant (3) et par rapport au boîtier (2) entre une position inactive dans ladite position d'accès et une position active dans ladite position de couplage, imposée par le déplacement relatif de l'élément coulissant par rapport au boîtier.

2. Dispositif selon la revendication 1, dans lequel l'élément coulissant (3), en particulier dans le deuxième espace de réception (31) défini par l'élément coulissant, a été pourvu d'un premier arrêt (23) orienté dans la seconde direction (B) pour buter contre un deuxième arrêt prévu sur le crochet d'attelage, en particulier la boule d'attelage, ledit deuxième arrêt présentant une ou plusieurs surface(s) présentant une normale avec une composante directionnelle dans la première direction, pour, après que les premier et deuxième arrêts aient buté l'un contre l'autre, déplacer l'élément coulissant (3) dans le premier espace de réception (30) dans la première direction (A) à partir de la position d'accès vers la position de couplage lorsque le boîtier (2) est déplacé par rapport au crochet d'attelage dans la seconde direction.

3. Dispositif selon la revendication 1 ou 2, dans lequel lesdits un ou plusieurs élément(s) de couplage (20) est (sont) déplaçable(s) par rapport à l'élément coulissant (3), de préférence dans des directions transversales à la première direction (A), entre la position inactive à l'extérieur du profil de chemin de la boule d'attelage lorsque l'on introduit la boule d'attelage dans le deuxième espace de réception et la position active dans laquelle ils s" étendent à l'intérieur dudit profil de chemin.

4. Dispositif selon la revendication 1, 2 ou 3, dans lequel lors du déplacement relatif de l'élément coulissant (3) dans la première direction (A), le boîtier (2) forme un premier élément de commande pour imposer le déplacement desdits un ou plusieurs élément(s) de couplage (20) à partir de la position inactive dans la position active, dans lequel lesdits un ou plusieurs élément(s) de couplage a (ont) été agencés pour, dans la position active, exercer une pression contre des surfaces de la boule d'attelage qui présentent une normale avec une composante directionnelle dans la seconde direction (B), dans la position de couplage de l'élément coulissant, dans lequel, de préférence, l'élément coulissant (3) forme un second élément de commande, qui comprend de préférence un guide (19) qui est de préférence transversal à la première direction, afin de guider lesdits un ou plusieurs éléments de couplage (20) lors de son (leur) déplacement entre la position inactive et la position active de ceux-ci, dans lequel, de préférence, le guide (19) fait partie d'un troisième espace de réception (18) pour chaque élément de couplage, ledit espace de réception étant formé par l'élément coulissant et dans lequel, de préférence, le troisième espace de réception (18) a été pourvu d'un seuil (24) afin de, dans une direction vers le deuxième espace de réception, empêcher l'élément de couplage en question d'en tomber.

5. Dispositif selon l'une quelconque des revendications précédentes, dans lequel le boîtier forme un (quatrième) espace de réception (21) pour chaque élément de couplage (20) dans sa position inactive, dans lequel, de préférence, le quatrième espace de réception au côté de l'élément coulissant (3) est délimité par des surfaces d'avancement (22) qui présentent une normale avec une composante directionnelle dans la seconde direction (B) et une composante directionnelle en direction du deuxième espace de réception (31).

6. Dispositif selon l'une quelconque des revendications précédentes, dans lequel le boîtier (2) forme un (troisième) arrêt pour maintenir les éléments de couplage (20) dans la position active, ledit troisième arrêt présentant de préférence une normale qui est transversale à la première direction, dans lequel, de préférence, dans la position active desdits un ou plusieurs élément(s) de couplage, le troisième arrêt délimite ledit troisième espace de réception (18) à son côté qui tourne le dos au deuxième espace de réception.

7. Dispositif selon la revendication 5 ou 6, lorsqu'elle dépend de la revendication 4 et qu'il est pourvu dudit troisième espace de réception (18), dans lequel lesdits troisième (18) et quatrième (21) espaces de réception sont alignés l'un avec l'autre dans la position d'accès de l'élément coulissant (3) et ne sont pas alignés l'un avec l'autre dans leur position de couplage.

8. Dispositif selon l'une quelconque des revendications précédentes, dans lequel lesdits un ou plusieurs élément (s) de couplage (20) sont des éléments séparés, tels que des rouleaux ou des billes, et sont en particulier rotatifs autour d'une ligne centrale parallèle à la ligne tangente à la boule d'attelage à l'endroit du contact entre l'élément de couplage en question et la boule d'attelage.

9. Dispositif selon l'une quelconque des revendications précédentes, dans lequel l'élément coulissant (3) forme une chambre (31) qui présente une paroi supérieure (16), un fond qui définit une ouverture d'accès (32) pour la boule d'attelage et une ou plusieurs paroi (s) latérale(s) (17), dans lequel, de préférence, l'élément coulissant présente un diamètre intérieur ou une largeur intérieure d'approximativement 5 cm, dans lequel, en cas de de dépendance à la revendication 2, la paroi supérieure (16) forme de préférence le premier arrêt (23).

10. Dispositif selon la revendication 9, lorsqu'elle dépend de la revendication 4 et qu'il est pourvu dudit troisième espace de réception (18), dans lequel la distance entre le côté inférieur de la paroi supérieure et le bord dudit (troisième) espace de réception (18) situé le plus près de la paroi supérieure (16) est supérieure à approximativement 2,4 cm, dans lequel, de préférence, la distance entre le côté inférieur (23) de la paroi supérieure (16) et le bord dudit (troisième) espace de réception situé le plus loin de la paroi supérieure est inférieur à approximativement 4 cm.

11. Dispositif selon l'une quelconque des revendications précédentes, dans lequel les éléments de couplage mobiles (20), lorsqu'ils sont considérés dans une direction horizontale circonférentielle de la boule d'attelage, sont opérationnels en un certain nombre d'endroits qui sont uniformément espacés.

12. Dispositif selon l'une quelconque des revendications précédentes, pourvu d'un dispositif de verrouillage (10) pour verrouiller l'élément coulissant (3) contre un déplacement de l'élément coulissant dans la seconde direction (B), dans lequel, de préférence, le dispositif de verrouillage comprend un (quatrième) arrêt (6) qui forme une unité coulissante avec l'élément coulissant et un élément de verrouillage mobile (12), qui est déplaçable entre une position de verrouillage en connexion opérationnelle avec le quatrième arrêt et une position de libération détachée de celui-ci, de préférence comprenant en outre un verrou (14) pour fixer l'élément de verrouillage (12) dans la position de verrouillage, dans lequel le verrou comprend de préférence un boulon à ressort (15), dans lequel, de préférence, l'élément de verrouillage est un cliquet (12), qui est de préférence agencé avec une poussée en direction de la position de libération.

13. Dispositif selon la revendication 12, dans lequel ledit (quatrième) arrêt (6) a été agencé sur une tige (4), à l'extrémité de laquelle l'élément coulissant (3) a été attaché, ladite tige s'étendant dans la première direction (A).

14. Dispositif selon l'une quelconque des revendications précédentes, dans lequel l'élément coulissant (3) a été prépoussé en direction de la position d'accès, de préférence comprenant en outre un ressort (8) pour ladite pré-poussée, opérationnel entre un (cinquième) arrêt (7) fixé au boîtier et un (sixième) arrêt (6) fixé à la tige, dans lequel, de préférence, lesdits cinquième et sixième arrêts sont situés au niveau du côté dudit quatrième arrêt qui tourne le dos à l'élément coulissant dans la première direction.

15. Ensemble d'un dispositif (1) selon l'une quelconque des revendications 1 à 14 et d'un accessoire à monter sur un crochet d'attelage en utilisant un dispositif de ce type, dans lequel le support et l'accessoire sont fixés l'un à l'autre.
